# EUROPEAN PATENT SPECIFICATION

(11) **EP 1 845 570 B1**
(45) Date of publication and mention of the grant of the patent: **16.09.2009**
(21) Application number: 07005568.6
(22) Date of filing: 19.03.2007
(51) Int. Cl.: H01M 2/10, H01M 10/04

(54) **Battery module having attachment members between battery cells**
Batteriemodul mit Verbindungsgliedern zwischen den Batteriezellen
Module de batterie doté d'éléments de fixation entre cellules de batterie

(30) Priority: 21.03.2006 KR 20060025485
(43) Date of publication of application: 17.10.2007
(73) Proprietor: LG Chemical, Ltd., Yongdungpo-gu, Seoul 150-721 (KR)
(72) Inventor: Kim, Ki Jae, Daejon 305-308 (KR); Kim, Min Su, Daejeon 302-120 (KR)
(74) Representative: HOFFMANN EITLE

(56) References cited:
- EP-A2- 0 926 748
- US-A- 5 451 473
- US-A- 5 763 112

## Description

### FIELD OF THE INVENTION

The present invention relates to a battery module having attachment members between battery cells, and, more particularly, to a battery module constructed in a structure in which a plurality of plate-shaped battery cells are stacked one on another wherein attachment members are interposed between the battery cells to prevent the battery cells from sliding due to external impacts and to absorb such external impacts.

### BACKGROUND OF THE INVENTION

Recently, a secondary battery, which can be charged and discharged, has been widely used as an energy source for wireless mobile devices. Also, the secondary battery has attracted considerable attention as an energy source for electric vehicles (EV) and hybrid electric vehicles (HEV), which have been developed to solve problems, such as air pollution, caused by existing gasoline and diesel vehicles using fossil fuel.

Small-sized mobile devices use one or several small-sized battery cells for each device. On the other hand, medium- or large-sized devices, such as vehicles, use a medium- or large-sized battery module having a plurality of battery cells electrically connected with each other because high output and large capacity are necessary for the medium- or large-sized devices.

Preferably, the medium- or large-sized battery module is manufactured with small size and small weight if possible. For this reason, a prismatic battery or a pouch-shaped battery, which can be stacked with high integration and has a small weight to capacity ratio, is usually used as a battery cell of the medium- or large-sized battery module. Especially, much interest is currently generated in the pouch-shaped battery, which uses an aluminum laminate sheet as a battery case.

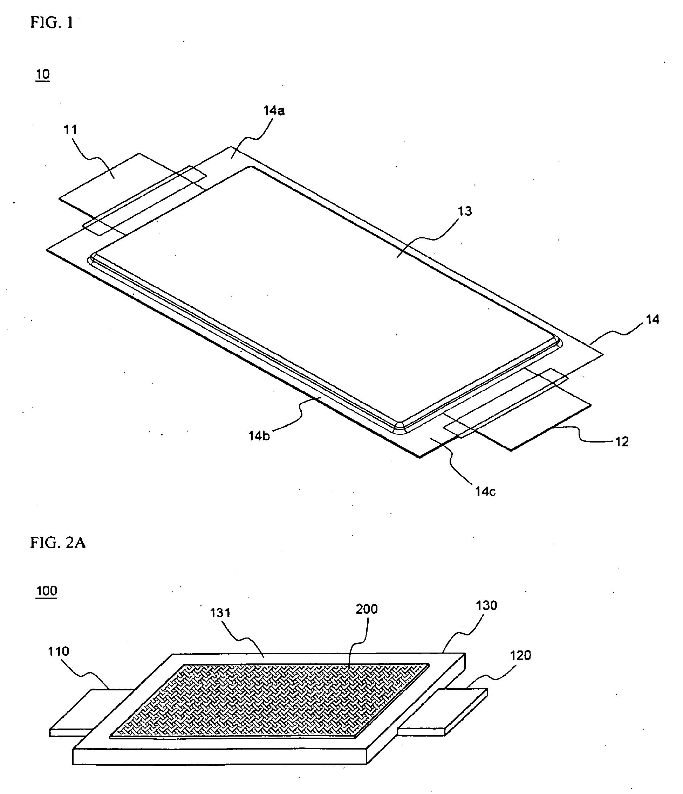

FIG. 1 is a perspective view typically illustrating a conventional representative pouch-shaped battery 10. The pouch-shaped battery 10 shown in FIG. 1 is constructed in a structure in which two electrode leads 11 and 12 protrude from upper and lower ends of a battery body 13, respectively, while the electrode leads 11 and 12 are opposite to each other. The pouch-shaped battery 10 is manufactured by receiving an electrode assembly (not shown) in a battery case 14 and bonding opposite sides 14a and upper and lower ends 14b and 14c of the battery case 14.

The battery case 14 is generally constructed in a laminate structure of a resin layer/a metal film layer/a resin layer. In a case that the surface of the battery case 14 is formed of an oriented nylon layer, for example, the battery case 15 may easily slide due to external impacts when a plurality of battery cells are stacked to construct a medium- or large-sized battery module. In order to prevent the sliding of the battery cells and to stably maintain the stacked structure of the battery cells, therefore, attachment members, such as an adhesive bonding agent, for example, a double-side adhesive tape, or a chemical bonding agent that can be coupled due to a chemical reaction when the chemical bonding agent is bonded, are attached to the surfaces of the respective battery cases, and then the battery cells are stacked one on another to construct a medium- or large-sized battery module.

In the above-specified attachment members, however, the adhesiveness of the attachment members is deteriorated after the long-term use of the attachment members, whereby the adhesive strength of the attachment members is greatly reduced. Furthermore, the battery cells are directly coupled with each other via the attachment members. Consequently, when an external force, such as shear stress, is directly applied to the attachment layers between the battery cells, the attachment layers are easily separated from the battery cells. As a result, the stacked structure of the battery cells is not maintained. Especially, the application of the attachment members to a medium- or large-sized battery module used as an energy source for electric vehicles and hybrid electric vehicles of which service life must be secured more than ten years or more is further limited.

Consequently, there is high necessity for attachment members the attachment strength of which is not reduced even after the long-term use and which stably maintain the stacked structure of the battery cells such that the attachment members can be applied to a medium- or large-sized battery module.

EP-A-0 926 748 relates to droppable battery packs made up of battery cells encased within a housing. The housing is made up of a stronger outer housing portion and a weaker inner housing portion. The battery cells may be secured to the stronger outer housing portion by means of matable Velcro (R) strips, to prevent a relative motion between the battery cells and the stronger of the housing portions that results when the battery packs are dropped.

US-A-5,673,112 describes a method and structure for attaching a battery to an electrical device. A conductive fastening means, such as a conductive Velcro-element (R), is used to attach and electrically couple the battery to the electrical device.

### SUMMARY OF THE INVENTION

Aspects of the present invention are defined in claims 1 and 6 below. The dependent claims are directed to optional and preferred features.

Therefore, the present invention has been made to solve the above problems, and other technical problems that have yet to be resolved.

As a result of a variety of extensive and intensive studies and experiments to solve the problems as described above, the inventors of the present invention have found that, when a battery module is manufactured using female- and male-type Velcro (R) tapes as attachment members disposed between battery cells constituting the battery module, the battery cells are securely attached to each other by the coupling between the female- and male-type Velcro (R) tapes, whereby the sliding of the battery cells due to external impacts is effectively prevented, the female- and male-type Velcro (R) tapes are elastically deformed, when the external impacts are applied to the battery cells, to absorb the external impacts, it is possible for a coolant, such as air, to pass through the coupled Velcro (R) tapes by virtue of the structural characteristics of the female- and male-type Velcro (R) tapes, whereby the cooling efficiency of the battery module is improved, and the long-term use of the female- and male-type Velcro (R) tapes is secured without the reduction of the attachment strength thereof, whereby the stacked structure of the battery module is stably maintained. The present invention has been completed based on these findings.

In accordance with the present invention, the above and other objects can be accomplished by the provision of a battery module constructed in a structure in which a plurality of plate-shaped battery cells are stacked one on another, wherein the battery module has attachment members interposed between the battery cells to prevent the battery cells from sliding due to external impacts and also to absorb the external impacts.

A representative example of the plate-shaped battery cell may be a secondary battery having an electrode assembly, which can be charged and discharged, mounted in a battery case, a sealing part of which is formed at the edge of the battery case by thermal welding. Preferably, the secondary battery is constructed in a structure in which the electrode assembly is mounted in a battery case made of a laminate sheet including a metal layer and a resin layer, for example, a pouch-shaped battery case made of an aluminum laminate sheet. The secondary battery with the above-stated structure may be said to be a pouch-shaped battery cell.

Preferably, the battery cell is a lithium secondary battery having high energy density, high discharge voltage, and high output stability. More specifically, the battery cell is a lithium-ion polymer battery manufactured by coupling cathodes and anodes while respectively interposing porous polymer separators between the cathodes and the anodes and impregnating the separators with an electrolyte. The lithium-ion polymer battery has an advantage in that the leakage of the electrolyte is maximally retrained, and a possibility that the lithium-ion polymer battery will catch fire or explode is very low as compared to a battery using a liquid-phase electrolyte. Components of the lithium-ion polymer battery and a method of manufacturing the lithium-ion polymer battery are well known in the art to which the present invention pertains, and therefore, a detailed description thereof will not be given.

The attachment members, which serve to prevent the battery cells from sliding due to the external impacts and to absorb the external impacts, include a hook-shaped male-type Velcro (R) tape and a loop-shaped female-type Velcro (R) tape, which are attached to opposite major surfaces of the neighboring battery cells. For example, the male-type Velcro tape and the female-type Velcro tape may be attached to the lower major surface of one battery cell and the upper major surface of another battery cell. Specifically, the female-type Velcro (R) tape attached to the upper major surface of one battery cell (a first battery cell) is coupled with the male-type Velcro (R) tape attached to the lower major surface of another battery cell (a second battery cell) positioned on the first battery cell while the upper major surface of the first battery cell is opposite to the lower major surface of the second battery cell.

The attachment members may be attached to at least one major surface of each of the battery cells as either one unit members or two or more unit members. When the attachment members are the Velcro tapes, the unit attachment members are independent Velcro tapes separated from each other by cutting. The size and the location of the unit attachment members are not particularly restricted. That is, the size and the location of the unit attachment members may be various so long as the unit attachment members can provide attachment strength sufficient to maintain the stacked structure of the battery module when a plurality of battery cells constituting the battery cell are stacked one on another. Also, the size of the unit attachment members may be different or not for each unit. When the attachment members are male- and female-type Velcro (R) tapes, it is preferable that the male- and female-type Velcro (R) tapes are attached to corresponding positions of the opposite major surfaces of the neighboring battery cells.

In the above-described structure, it is preferable that at least a part of the Velcro (R) tapes is made of a material having high heat conductivity. This is to rapidly move heat generated during the charge and discharge of the battery cells to the Velcro (R) tapes and remove the heat using a coolant, such as air, passing through the coupled Velcro (R) tapes by virtue of the structural characteristics of the female- and male-type Velcro (R) tapes.

According to the present invention, a plurality of battery modules, each of which is coupled in the above-described structure, may be combined to provide a medium- or large-sized battery module having high output and large capacity. In this case, the coupling of each battery module may be accomplished in various manners in addition to the above description. The battery modules may be variably combined with each other depending desired output and capacity, and therefore, the applicability of the battery modules is very high.

Preferably, the medium- or large-sized battery module is used as power source for various kinds of devices, such as electric vehicles, hybrid electric vehicles, electric motorcycles, and electric bicycles, which require high-output and large-capacity electricity and to which external forces, such as vibrations and impacts, are applied.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view illustrating a conventional representative pouch-shaped battery;
FIG. 2A is a perspective view illustrating a pouch-shaped battery to the upper major surface of which a Velcro (R) tape, as an attachment member according to a preferred embodiment of the present invention, is attached;
FIG. 2B is a perspective view illustrating another attachment member attached to the lower major surface of the pouch-shaped battery shown in FIG. 2A; and
FIG. 3 is a sectional view illustrating a battery module including a plurality of pouch-shaped batteries stacked one on another.

### DETAILED DESCRIPTION OF PREFERRED EMBODIMENTS

Now, a preferred embodiment of the present invention will be described in detail with reference to the accompanying drawings. It should be noted, however, that the scope of the present invention is not limited by the illustrated embodiment.

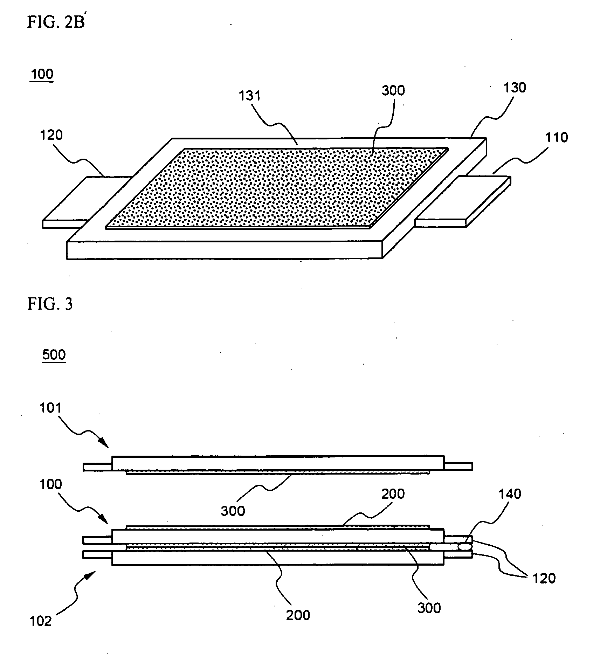

FIG. 2A is a perspective view illustrating a pouch-shaped battery 100 to the upper major surface of which a Velcro tape, as an attachment member according to a preferred embodiment of the present invention, is attached, and FIG. 2B is a perspective view illustrating another attachment member attached to the lower major surface of the pouch-shaped battery 100 shown in FIG. 2A.

Referring to FIGS. 2A and 2B, the pouch-shaped battery 100 is constructed in a structure in which two electrode leads 110 and 120 protrude from upper and lower ends of a battery case 130, respectively, while the electrode leads 110 and 120 are opposite to each other. To an upper major surface 131 of the battery case 130 is attached a female-type Velcro (R) tape 200. To a lower major surface 132 of the battery case 130 is attached a male-type Velcro (R) tape 300. By the coupling between the female-type Velcro (R) tape 200 and the male-type Velcro (R) tape 300, the pouch-shaped battery 100 is attached to other pouch-shaped batteries to construct a battery module. The structure of the battery module is illustrated in FIG. 3, which is a sectional view illustrating a battery module 500 including a plurality of pouch-shaped batteries stacked one on another.

Referring to FIG. 3, the battery module 500 is constructed in a structure in which a first battery 100 having a female-type Velcro (R) tape 200 attached to the upper major surface thereof and a male-type Velcro (R) tape 300 attached to the lower major surface thereof is disposed below a second battery 101 having male-type Velcro (R) tape 300 attached to the lower major surface thereof, and the first battery 100 is disposed on a third battery 102 having a female-type Velcro (R) tape 200 attached to the upper major surface thereof. The batteries 100, 101, and 102 of the battery module 500 are stably stacked one on another by the coupling between the female-type Velcro (R) tapes 200 and the corresponding male-type Velcro (R) tapes 300. As a result, leads 120 connected by a welded part 140 are not easily separated from each other due to external impacts, such as shear stress. Consequently, the battery module 500 can be easily applied to vehicles.

Hereinafter, an example of the present invention will be described in detail. It should be noted, however, that the scope of the present invention is not limited by the illustrated example.

### [Example 1]

A mixture including 95 weight percent of LiCoO₂, 2.5 weight percent of Super-P (a conducting agent), and 2.5 weight percent of PVdF (a coupling agent), as a cathode active material, was added to NMP (N-methyl-2-pyrrolidone), as a solvent, so as to manufacture cathode mixture slurry. Subsequently, the cathode mixture slurry was applied to aluminum foil, which was dried and pressed to manufacture cathodes. Similarly, a mixture including 95 weight percent of artificial graphite, 2.5 weight percent of Super-P (a conducting agent), and 2.5 weight percent of PVdF (a coupling agent), as an anode active material, was added to NMP, as a solvent, so as to manufacture anode mixture slurry. Subsequently, the anode mixture slurry was applied to copper foil, which was dried and pressed to manufacture anodes.

CellGuard^{™} was used as separators. The cathodes, the anodes, and the separators were sequentially stacked to construct an electrode assembly. The electrode assembly was mounted in a pouch-shaped battery case made of an aluminum laminate sheet, and then an electrolyte was injected into the battery case to complete a pouch-shaped battery. The above-mentioned process was repeatedly performed to complete another pouch-shaped battery.

A female-type Velcro (R) tape was attached to the case surface of one pouch-shaped battery, and a male-type Velcro (R) tape was attached to the case surface of another pouch-shaped battery in the same manner as shown in FIG. 2. The two pouch-shaped batteries were coupled with each other, while the female-type Velcro (R) tape and the male-type Velcro (R) tape were opposite to each other, to manufacture a battery module.

### [Comparative example 1]

A battery module was manufactured in the same manner as Example 1 except that a double-side adhesive tape was attached to the case surface of one pouch-shaped battery, and then another pouch-shaped battery was coupled to the one pouch-shaped battery via the double-side adhesive tape.

### [Experimental example 1]

The battery modules manufactured according to Example 1 and Comparative example I were put in a Z-axis vibration test to confirm the coupling between the batteries (a vibration test). The test result revealed that the battery module manufactured according to Example 1 exhibited little difference as compared to before the Z-axis vibration test, whereas the battery module manufactured according to Comparative example 1 exhibited positional deviation of approximately 10% between the respective batteries constituting the battery module as compared to before the Z-axis vibration test.

Also, the battery modules manufactured according to Example 1 and Comparative example 1 were put in high-temperature and high-humidity conditions, i.e., a temperature of 60°C and a humidity of 90%, for seven weeks to confirm the coupling between the batteries (a weathering test). The test result revealed that the battery module manufactured according to Example 1 exhibited little difference as compared to before the weathering test, whereas the battery module manufactured according to Comparative example 1 exhibited a 30 percent reduction of adhesive strength as compared to before the weathering test.

In addition, the battery modules manufactured according to Example 1 and Comparative example 1 were continuously charged with high current and discharged at room temperature (a cooling efficiency test). The test result revealed that the battery module manufactured according to Example 1 exhibited an increase of 2°C as compared to before the cooling efficiency test, whereas the battery module manufactured according to Comparative example 1 exhibited an increase of 8 °C as compared to before the cooling efficiency test.

As apparent from the above description, the battery cells constituting the battery module according to the present invention are securely attached to each other by the coupling between the female- and male-type Velcro (R) tapes. Consequently, the sliding of the battery cells due to external impacts is effectively prevented. Also, the female- and male-type Velcro (R) tapes are elastically deformed, when the external impacts are applied to the battery cells, to absorb the external impacts. In addition, it is possible for a coolant, such as air, to pass through the coupled Velcro (R) tapes by virtue of the structural characteristics of the female- and male-type Velcro (R) tapes. Consequently, the cooling efficiency of the battery module is improved. Furthermore, the long-term use of the female- and male-type Velcro (R) tapes is secured without the reduction of the attachment strength thereof, and therefore, the stacked structure of the battery module is stably maintained.

Although the preferred embodiment of the present invention has been disclosed for illustrative purposes, those skilled in the art will appreciate that various modifications, additions and substitutions are possible, without departing from the scope of the invention as disclosed in the accompanying claims.

## Claims

1. A battery module constructed in a structure in which a plurality of plate-shaped battery cells are stacked one on another, wherein
the battery module has attachment members interposed between the battery cells, wherein the attachment members are composed of a hook-shaped male-type tape and a loop-shaped female-type tape and are attached to opposite major surfaces of the neighbouring battery cells and securely attached to each other by the coupling, whereby the stacked structure of the battery module is stably maintained and also the cooling efficiency of the battery module is improved.

2. The battery module according to claim 1, wherein the plate-shaped battery cells are pouch-shaped cells, each of which has an electrode assembly mounted in a battery case made of a laminate sheet including a metal layer and a resin layer.

3. The battery module according to claim 2, wherein the battery cells are lithium-ion polymer batteries.

4. The battery module according to claim 1, wherein the attachment members are attached to at least one major surface of each of the battery cells as either one unit members or two or more unit members.

5. The battery module according to claim 1, wherein at least a part of the tapes is made of a material having high heat conductivity.

6. Use of the battery module according to claim 1 as a power source for electric vehicles and hybrid electric vehicles.

## Patentansprüche

1. Batteriemodul, das in einer Struktur aufgebaut ist, bei der mehrere plattenförmige Batteriezellen aufeinander geschichtet sind, wobei
das Batteriemodul zwischen den Batteriezellen eingefügte Anbringungselemente aufweist, wobei die Anbringungselemente aus einem hakenförmigen Band männlicher Art und einem schlaufenförmigen Band weiblicher Art bestehen und an gegenüberliegenden Hauptoberflächen der nebeneinander liegenden Batteriezellen angebracht sind und aneinander durch die Kopplung fest angebracht sind, wodurch die geschichtete Struktur des Batteriemoduls stabil aufrechterhalten und außerdem die Kühlungseffizienz des Batteriemoduls verbessert wird.

2. Batteriemodul nach Anspruch 1, bei dem die plattenförmigen Batteriezellen taschenförmige Zellen sind, von denen jede eine Elektrodenanordnung aufweist, die in einem Batteriegehäuse bestehend aus einem Schichtblatt, das eine Metallschicht und eine Harzschicht beinhaltet, angebracht ist.

3. Batteriemodul nach Anspruch 2, bei dem die Batteriezellen Lithiumionen-Polymerbatterien sind.

4. Batteriemodul nach Anspruch 1, bei dem die Anbringungselemente an mindestens einer Hauptoberfläche jeder der Batteriezellen als entweder ein Einheitselement oder zwei oder mehr Einheitselemente angebracht sind.

5. Batteriemodul nach Anspruch 1, bei dem zumindest ein Teil der Bänder aus einem Material besteht, das eine hohe Wärmeleitfähigkeit aufweist.

6. Verwendung des Batteriemoduls nach Anspruch 1 als eine Leistungsquelle für Elektrofahrzeuge und Hybridelektrofahrzeuge.

## Revendications

1. Module de batterie construit dans une structure dans laquelle plusieurs cellules de batterie sous forme de plaques sont empilées les uns sur les autres, où
le module de batterie possède des éléments de fixation interposés entre les cellules de batterie, où les éléments de fixation sont composés d'une bande de type mâle en forme de crochet et d'une bande de type femelle en forme de boucle et sont fixés aux surfaces principales opposées des cellules de batterie avoisinantes et attachés de manière fixe entre eux par l'accouplement, par quoi la structure empilée du module de batterie est maintenue de manière stable et on améliore également l'efficacité du refroidissement du module de batterie.

2. Module de batterie selon la revendication 1, dans lequel les cellules de batterie en forme de plaques sont des cellules en forme de poches, chacune desquelles a un ensemble d'électrodes monté dans un boîtier de batterie réalisé en une feuille stratifiée comprenant une couche de métal et une couche de résine.

3. Module de batterie selon la revendication 2, dans lequel les cellules de batterie sont des batteries polymères à ions lithium.

4. Module de batterie selon la revendication 1, dans lequel les éléments de fixation sont fixés à au moins une surface principale de chacune des cellules de batterie soit comme éléments d'une unité soit comme éléments à deux unités ou plus.

5. Module de batterie selon la revendication 1, dans lequel au moins une partie des bandes est faite d'un matériau ayant une conductivité thermique élevée.

6. Utilisation du module de batterie selon la revendication 1 comme source d'énergie pour des véhicules électriques et des véhicules électriques hybrides.
